# EUROPÄISCHE PATENTSCHRIFT

(11) **EP 2 778 114 B1**
(45) Veröffentlichungstag und Bekanntmachung des Hinweises auf die Patenterteilung: **15.05.2019**
(21) Anmeldenummer: 14159380.6
(22) Anmeldetag: 13.03.2014
(51) Int. Cl.: B67C 3/22, B65B 55/02, B29C 49/42

(54) **Vorrichtung sowie Verfahren zur Behandlung mindestens eines Behälters**
Device and method for treating at least one container
Dispositif et procédé de traitement d'au moins un récipient

(30) Priorität: 13.03.2013 DE 102013102516
(43) Veröffentlichungstag der Anmeldung: 17.09.2014
(73) Patentinhaber: Krones AG, 93073 Neutraubling (DE)
(72) Erfinder: Braun, Franz, 93073 Neutraubling (DE); Söllner, Jürgen, 93073 Neutraubling (DE)
(74) Vertreter: Nordmeyer, Philipp Werner

(56) Entgegenhaltungen:
- EP-A1- 2 535 650
- DE-A1- 19 709 067
- DE-A1- 19 945 500
- DE-A1-102004 049 520
- DE-U1-202004 001 619
- GB-A- 407 672

## Beschreibung

### Technisches Gebiet

Die vorliegende Erfindung betrifft eine Vorrichtung gemäß dem Oberbegriff des Anspruchs 1 sowie ein Verfahren gemäß dem Oberbegriff des Anspruchs 12 zur Behandlung mindestens eines Behälters, bevorzugt zum Befüllen eines Behälters mit einem Füllprodukt in einer Getränkeabfüllanlage und/oder zum Umformen eines Behälters, beispielsweise zum Umformen eines Preform in einen mit Füllprodukt zu befüllenden Behälter durch Streckblasformen, wobei die Behandlung des Behälters in einem Isolatorraum stattfindet. Eine gattungsgemäße Vorrichtung und ein gattungsgemäßes Verfahren sind aus der DE 199 45 500 A1 bekannt.

### Stand der Technik

Zur Behandlung von Behältern und insbesondere zur Befüllung von Behältern mit einem Füllgut, beispielsweise in einer kaltaseptischen Getränkeabfüllanlage, ist es bekannt, die eigentliche Behälterbehandlung innerhalb eines so genannten Isolatorraumes durchzuführen. Unter einem Isolatorraum wird ein gegenüber der Umgebung abgeschlossener Raum verstanden, in welchem eine definierte Atmosphäre vorliegt, welche sich beispielsweise durch eine reduzierte Keimzahl, eine reduzierte Sporenzahl, eine reduzierte Partikelzahl, eine definierte Temperatur und/oder eine kontrollierte Luftfeuchtigkeit gegenüber der Umgebung auszeichnet. Einem solchen Isolatorraum wird typischerweise eine durch eine Zuluftaufbereitung aufbereitete Zuluft zugeführt, um die gewünschte Atmosphäre zu erreichen. In der Zuluftaufbereitung wird die Luft beispielsweise über Filteranlagen gereinigt, über entsprechende Entfeuchter beziehungsweise Befeuchter auf eine vorgegebene Luftfeuchtigkeit gebracht und über entsprechende Temperiermittel auf eine vorgegebene Temperatur gebracht.

Bei der kaltaseptischen Abfüllung von Getränken in einer Getränkabfüllanlage, beispielsweise bei der Abfüllung von Milchprodukten in Behälter, ist es notwendig, dass zumindest im Abfüllbereich eine bestimmte Temperatur nicht überschritten wird bei der Abfüllung der Eintrag von Keimen und Sporen reduziert ist. Dies kann durch die Kontrolle der dem Isolatorraum zugeführten Luft erreicht werden, wobei die Abfüllung dann in dem Isolatorraum durchgeführt wird. Neben der eigentlichen Abfüllung kann in dem Isolatorraum beispielsweise auch eine Sterilisierung der zu befüllenden Behälter und/oder das Verschließen der befüllten Behälter stattfinden, so dass auch für diese Behälterbehandlungen die vorgegebenen Umgebungsbedingungen eingehalten werden können. Die geringe Keim- und Sporenbelastung ist von ausschlaggebender Bedeutung für die Haltbarkeit des abgefüllten Produkts. Je geringer die Keimbelastung im abgefüllten Produkt ist, desto länger ist auch dessen Haltbarkeit. Durch eine reduzierte Temperatur im Isolatorraum kann weiterhin das Keimwachstum verlangsamt werden.

Eine Kondensation von Wasser aus feuchter Luft kann zu einem verstärkten Wachstum von bereits vorhandenen Mikroorganismen auf den dann feuchten Flächen der Behandlungsvorrichtung führen. Eine Kondensation kann beispielsweise an Füllventilen, Vorlagekesseln oder Produktleitungen, welche durch den Füllproduktstrom oder eine separate Kühlvorrichtung gekühlt werden, oder an den gekühlten Kavitäten eines Formwerkzeugs beim Umformen von Preforms stattfinden. Die Kondensation muss entsprechend unterbunden werden, um eine hygienisch einwandfreie Behandlung der Behälter zu erreichen.

Aus dem Stand der Technik ist es bekannt, den Isolatorraum über eine zentrale Zuluftaufbereitung mit der aufbereiteten Luft zu versorgen. Diese zentrale Zuluftaufbereitung entnimmt üblicherweise die Luft aus der Umgebung des Isolatorraums, beispielsweise aus der Produktionshalle, in welcher die Vorrichtung zur Behandlung der Behälter aufgebaut ist. Diese Umgebungsluft wird dann über Filter, Entfeuchter beziehungsweise Befeuchter, sowie Temperiervorrichtungen aufbereitet und dem Isolatorraum zugeführt. Bevorzugt wird die Luft aus dem Isolatorraum wieder kontrolliert abgesaugt, um auf diese Weise eine stete Zufuhr an aufbereiteter Luft sicherzustellen und die möglicherweise über das Füllprodukt beziehungsweise den Behälterbehandlungsprozess eingetragenen, der Atmosphäre im Isolatorraum abträglichen Partikel, beispielsweise auch Desinfektionsmitteldämpfe, aus dem Isolatorraum wieder zu entfernen. Das Absaugen von Desinfektionsmitteldämpfen kann auch zum Schutze der Bediener der Anlage durchgeführt werden.

Die Zuluftaufbereitung dient weiterhin dazu, im Isolatoraum einen Überdruck gegenüber der Umgebung aufrecht zu erhalten, um eine Abdichtung der Atmosphäre im Isolatorraum zu erreichen. Die abgesaugte Luft wird üblicherweise ins Freie ausgeblasen.

Um die zu behandelnden Behälter in den Isolatorraum hinein oder aus diesem hinaus zu schleusen, ist üblicherweise mindestens eine Behälterschleuse vorgesehen, beispielsweise in Form eines Isolatoreinlaufs oder eines Isolatorauslaufs, welche den Übergang zwischen der Umgebung und dem Isolatorraum bereitstellt. Entsprechend findet in der Behälterschleuse auch ein Übergang von der Umgebungsatmosphäre zu der definierten Atmosphäre im Isolatorraum statt. Die Behälterschleuse wird hierzu beispielsweise mit einem leichten Unterdruck betrieben, so dass ein steter Luftstrom aus dem Isolatorraum heraus in Richtung der Behälterschleuse stattfindet, um auf diese Weise ein Eindringen von Umgebungsluft über die Behälterschleuse in den Isolatorraum zu verhindern. Auch die aus der Behälterschleuse abgesaugte Luft, bei welcher es sich um ein Luftgemisch aus der aus dem Isolatorraum ausströmenden sowie der aus der Umgebung angesaugten Luft handelt, wird üblicherweise ins Freie abgeführt.

Eine Sterilisierung des Isolatorraums sowie der im Isolatorraum vorgesehenen Anlagenkomponenten findet beispielsweise mit gasförmigen H₂O₂ statt, welches über die Zuluft dem Isolatorraum zugeführt wird und welches dort auf die entsprechenden Oberflächen einwirkt. Das H₂O₂ wird dann aus dem Isolatorraum sowie der Behälterschleuse zusammen mit der übrigen Isolatorluft abgesaugt. Das H₂O₂ kann aber aus Gründen des Emissionsschutzes nicht direkt ins Freie ausgeblasen werden, sondern muss aufwändig über einen Gaswäscher ausgewaschen werden.

Durch die in der Zuluftaufbereitung durchgeführte ausschließliche Aufbereitung von Umgebungsluft ist es notwendig, dass stets 100% der dem Isolatorraum zugeführten Luft vollständig aufbereitet werden. Daher sind die jeweiligen Aggregate entsprechend groß zu dimensionieren.

Beim Umformen eines Preforms zu einem mit Füllprodukt zu befüllenden Behälter, beispielsweise durch Streckblasformen, ist es von Bedeutung für die Qualität der zu befüllenden Behälter, dass eine Kondensation an den Blasformen und insbesondere in den Kavitäten der Werkzeuge verhindert wird. Da die Kavitäten üblicherweise gekühlt werden, kann hier eine Kondensation von Luftfeuchtigkeit einsetzen, welche die Qualität der umgeformten Behälter beeinträchtigt und welche auch als Nährboden für die Vermehrung von bereits vorhandenen Mikroorganismen dienen kann. Entsprechend ist hier auch eine Kondensation zu vermeiden.

Die DE 197 09 067 A1 beschreibt ein Verfahren zur Steuerung der Luftgeschwindigkeit in einem Sterilisierungstunnel während der Aufheizphase. Die DE 10 2004 049 520 A1 beschreibt ein Verfahren und eine Anlage zur Belüftung von Reinräumen. Die EP 2 535 650 A1 beschreibt eine Dekontaminationsanordnung und ein diesbezügliches Verfahren. Die DE 20 2004 001 619 U1 beschreibt eine Anlage zum aseptischen Abfüllen eines flüssigen Füllguts. Die GB 407,672 A beschreibt ein Verfahren und eine Vorrichtung zum sterilen Abfüllen von Flüssigkeiten in Glasflaschen, die einen passenden Verschluss aufweisen. Die DE 199 45 500 A1 beschreibt ein Verfahren und eine Vorrichtung zum Entkeimen von Behältern in einer Füllmaschine.

### Darstellung der Erfindung

Ausgehend von dem bekannten Stand der Technik ist es eine Aufgabe der vorliegenden Erfindung, eine Vorrichtung sowie ein Verfahren zur Behandlung mindestens eines Behälters anzugeben, bei welchem die Aufbereitung der einem Isolatorraum zugeführten Luft effizienter gestaltet wird und die mikrobiologische Sicherheit der Vorrichtung verbessert wird.

Diese Aufgabe wird durch eine Vorrichtung zur Behandlung mindestens eines Behälters mit den Merkmalen des Anspruchs 1 gelöst. Vorteilhafte Weiterbildungen ergeben sich aus den Unteransprüchen.

Entsprechend wird eine Vorrichtung zur Behandlung mindestens eines Behälters, bevorzugt zum Befüllen mindestens eines Behälters mit einem Füllprodukt und/oder zum Umformen eines Behälters, vorgeschlagen, umfassend einen eine definierte Atmosphäre umfassenden Isolatorraum, in welchem die Behandlung des Behälters vorgenommen wird, und mindestens eine Behälterschleuse zum Einbringen des Behälters in den Isolatorraum oder zum Ausbringen des Behälters aus dem Isolatorraum, eine Absaugvorrichtung zum Absaugen von Luft aus der Behälterschleuse und aus dem Isolatorraum, sowie eine Zuluftaufbereitung zur Aufbereitung von dem Isolatorraum zuzuführender Luft. Die Absaugvorrichtung ist so mit der Zuluftaufbereitung verbunden, dass zumindest ein Teil der aus der Behälterschleuse und dem Isolatorraum abgesaugten Luft der Zuluftaufbereitung zur erneuten Aufbereitung zugeführt wird.

Dadurch, dass die Absaugvorrichtung so mit der Zuluftaufbereitung verbunden ist, dass zumindest ein Teil der aus der Behälterschleuse und dem Isolatorraum abgesaugten Luft der Zulaufaufbereitung zur erneuten Aufbereitung zugeführt wird, kann erreicht werden, dass die bereits aufbereitete Luft aus dem Isolatorraum und aus der Behälterschleuse erneut aufbereitet wird und dadurch beispielsweise einen Filter zur Filterung der Luft erneut durchläuft. In diesem Zusammenhang ist anzumerken, dass die Erzeugung von Sterilluft durch Filterung auf Wahrscheinlichkeiten beruht. Mit anderen Worten besteht eine bestimmte Wahrscheinlichkeit dafür, dass ein bestimmter Keim oder ein bestimmter Partikel tatsächlich in der jeweiligen Filtervorrichtung zurückgehalten wird. Entsprechend ergibt sich durch wiederholte Filterung der Luft eine erhöhte Wahrscheinlichkeit für eine verbesserte Sterilität der so aufbereiteten Luft. Damit kann durch die erneute Zuführung der aus dem Isolatorraum sowie der Behälterschleuse abgesaugten Luft eine verbesserte Sterilität und damit eine verbesserte mikrobiologische Sicherheit der Vorrichtung erreicht werden.

Weiterhin ist die aus dem Isolatorraum und der Behälterschleuse abgesaugte Luft bereits weitgehend temperiert und weitgehend auf die gewünschte Luftfeuchtigkeit gebracht, so dass der Aufwand zur erneuten Temperierung beziehungsweise zur Einstellung der Luftfeuchtigkeit gegenüber einem Zuführen von 100% Umgebungsluft reduziert ist. Damit können Komponenten der Vorrichtung kleiner dimensioniert werden und/oder im Betrieb der Vorrichtung kann Energie eingespart werden.

Der aus dem Isolatorraum sowie der Behälterschleuse abgesaugte Gesamtluftvolumenstrom ist üblicherweise größer, als der dem Isolatorraum wieder zuzuführende Volumenstrom an aufbereiteter Luft. Dies ist dem Umstand geschuldet, dass im Bereich der Behälterschleuse nicht nur die aus dem Isolatorraum ausströmende, bereits aufbereitete Luft abgesaugt wird, sondern ebenfalls Umgebungsluft abgesaugt wird, welche aus dem der Umgebung zugewendeten Ende der Behälterschleuse zufließt. Darüber hinaus wird bei der Behandlung der Behälter im Isolatorraum üblicherweise Prozessluft verwendet, welche den abzusaugenden Gesamtvolumenstrom erhöht. Zusätzlich wird üblicherweise ein Füllprodukt in die zu behandelnden Behälter eingefüllt, welches das in den jeweiligen Behältern vorliegende Luftvolumen verdrängt und damit auch den abzusaugenden Gesamtvolumenstrom erhöht. Alle diese Faktoren tragen dazu bei, dass der Gesamtvolumenstrom, welcher aus dem Isolatorraum sowie der Behälterschleuse abgesaugt wird, größer ist, als der dem Isolatorraum wieder zuzuführende Volumenstrom an aufbereiteter Luft.

Erfindungsgemäß ist daher ein Volumenstromteiler vorgesehen, mittels welchem der Anteil an aus dem Isolatorraum und der Behälterschleuse abgesaugter Luft, welcher der Zuluftaufbereitung zugeführt wird, abgeteilt wird. Der Volumenstromteiler ist ein variabler Volumenstromteiler, mittels welchem der Anteil an abgesaugtem Luftvolumen, welcher der Zuluftaufbereitung zugeführt wird, variabel eingestellt werden kann. Der überschüssige Anteil an abgesaugtem Luftvolumen wird in beiden Fällen beispielsweise ins Freie abgeleitet. Durch das Bereitstellen des Volumenstromteilers kann erreicht werden, dass die gesamte Zuluft zu der Zuluftaufbereitung aus der abgesaugten Luft gespeist wird. Hierdurch kann ein besonders effizienter Betrieb der Vorrichtung erreicht werden, da der Zuluftaufbereitung 100% abgesaugte Luft zugeführt wird, so dass der entsprechende Temperierungs- und Befeuchtungs- beziehungsweise Entfeuchtungsaufwand gering gehalten wird und die mikrobiologische Sicherheit der Anlage gesteigert wird.

In einer weiteren bevorzugten Ausbildung ist zusätzlich eine Umgebungsluftzufuhr zu der Zuluftaufbereitung vorgesehen, über welche Umgebungsluft, beispielsweise aus der Produktionshalle in welcher die Vorrichtung aufgestellt ist, der Zuluftaufbereitung zugeführt werden kann. Auf diese Weise kann bei der Zuluftaufbereitung der Anteil an Umgebungsluft, welcher neu in den Kreislauf eingespeist werden soll, genau festgelegt werden.

Weiterhin ist bevorzugt eine Frischluftzufuhr zur Zuluftaufbereitung vorgesehen, mittels welcher Frischluft aus einem Außenbereich, beispielsweise aus dem Freien, der Zuluftaufbereitung zugeführt werden kann.

Auf diese Weise kann, je nach Umgebungsbedingungen und je nach Außenbedingungen, eine effiziente Anlagenführung erreicht werden. Beispielsweise ist die kalte Luft im Winter relativ trocken, so dass eine mögliche Entfeuchtung mit geringem Aufwand betrieben werden oder gar entfallen kann. Die beispielsweise im Sommer angesaugte warme Luft braucht möglicherweise nicht weiter erwärmt zu werden. Durch eine entsprechende Anlagensteuerung kann auch durch die Einstellung der Anteile der aus der Umgebung, also beispielsweise der Produktionshalle, angesaugten Luft und der aus dem Freien angesaugten Luft der Energieaufwand für die Zuluftaufbereitung weiter reduziert werden.

In einer weiteren bevorzugten Ausbildung ist eine Steuerung vorgesehen, welche den Anteil an Frischluft und Umgebungsluft, welcher der Zuluftaufbereitung zugeführt wird, gemäß den jeweiligen Umgebungs- und Außenbedingungen sowie gemäß den geforderten Betriebsparametern der Vorrichtung steuert.

Bevorzugt ist eine Kältefalle stromabwärts der Absaugvorrichtung vorgesehen, um die aus dem Isolator sowie der Behälterschleuse abgesaugte Luft von Desinfektionsmittel und/oder Sterilisationsmittel, beispielsweise H₂O₂, zu befreien. Hierzu wird in der Kältefalle die Luft unter die jeweilige Kondensationstemperatur des zu entfernenden Komponente, beispielsweise unter die Kondensationstemperatur des in der jeweiligen Konzentration vorliegenden H₂O₂, abgekühlt, so dass die jeweilige Komponente kondensiert und entsprechend aus dem Luftstrom entfernt wird. Damit kann vor dem Ausblasen eines Teiles der abgesaugten Luft ins Freie das Desinfektionsmittel und/oder Sterilisationsmittel, beispielsweise das H₂O₂, entfernt werden, ohne dass hierzu ein aufwändiger Gaswäscher notwendig wäre. Auf diese Weise kann die Gesamtanlage einfacher ausgeführt werden und der Zuluftaufbereitung wird stets relativ trockene und weitgehend desinfektionsmittelfreie und/oder sterilisationsmittelfreie Luft zur Aufbereitung, beispielsweise zur erneuten Filterung und Temperierung, zugeführt.

Um ein Ausblasen von Desinfektionsmittel und/oder Sterilisationsmittel in die Umgebung zu reduzieren oder zu verhindern, ist eine Kältefalle bevorzugt vor einem Volumenstromteiler angeordnet. In einer weiteren Ausbildung kann eine Kältefalle zur Verhinderung des Ausblasens von Desinfektionsmittel und/oder Sterilisationsmittel auch nach einem Volumenstromteiler in dem ins Freie ausleitenden Strang der Luftführung vorgesehen sein. Auf diese Weise wird der Energiebedarf für die Kältefalle reduziert, da nur der ins Freie abzugebende Teil der abgesaugten Luft in der Kältefalle behandelt werden muss.

In der genannten Ausbildung ist bevorzugt dann mindestens eine weitere Kältefalle in der Zuluftaufbereitung vorgesehen, um die dem Isolator zuzuführende Luft zu trocknen. Diese Kältefalle kann beispielsweise bei einer anderen Temperatur betrieben werden, wobei die beiden Kältefallen dann auf ihren jeweiligen Anwendungsbereich hin optimiert werden können.

Zusätzlich oder alternativ zu der Kältefalle kann auch mindestens ein Katalysator vorgesehen sein, welcher zum Abbau des Desinfektionsmittels und/oder des Reinigungsmittels stromabwärts Absaugvorrichtung angeordnet ist. Auf diese Weise kann vor dem Abblasen der abgesaugten Luft in die Umgebung beziehungsweise vor der Wiederverwendung der abgesaugten Luft zur erneuten Zuführung zum Isolatorraum das Desinfektionsmittel und/oder das Reinigungsmittel vernichtet werden. Durch die Verwendung von Katalysatoren kann die Kältefalle auch bei einer höheren Temperatur betrieben werden, so dass der Energieaufwand zum Betrieb der Kältefalle reduziert werden kann.

Die Zuluftaufbereitung ist bevorzugt in Form einer zentralen Zuluftaufbereitung, mittels welcher die Zuluft für eine Vielzahl an Verbrauchern einer Behälterbehandlungsanlage aufbereitet und diesen zugeführt wird, ausgebildet.

Die Zuluftaufbereitung umfasst bevorzugt mindestens einen Sterilfilter, mindestens eine Temperierungsvorrichtung, eine Kältefalle und/oder mindestens ein Mittel zur Einstellung der Luftfeuchtigkeit. Auf diese Weise kann die zuzuführende Luft so aufbereitet werden, dass die gewünschte Atmosphäre im Isolatorraum erzeugt wird. Über einen entsprechenden Ventilator wird dann im Isolatorraum der erforderliche leichte Überdruck hergestellt, welcher dazu dient, einen steten Luftstrom in Richtung der Behälterschleuse aufrechtzuerhalten und dadurch eine Isolierung des Isolatorraums zu erreichen.

Bevorzugt ist ein Wärmetauscher vorgesehen, welcher so angeordnet ist, dass er dem nicht der Zuluftaufbereitung zugeführten Teil der abgesaugten Luft Wärmeenergie entzieht und diese der Zuluftaufbereitung, der Umgebungsluftzufuhr und/oder der Frischluftzufuhr zuführt. So kann die Energieeffizienz der Vorrichtung weiter verbessert werden, da die Wärmeenergie der abgesaugten Luft weitgehend in der Vorrichtung gehalten werden kann.

In einer weiteren bevorzugten Ausbildung ist die Zuluftaufbereitung auch zur Zudosierung von Desinfektionsmittel und/oder Reinigungsmittel zu der dem Isolatorraum zuzuführenden Luft vorgesehen. Dabei kann beispielsweise gasförmiges H₂O₂ als Desinfektionsmittel zudosiert werden. Die Reinigung und Sterilisierung des Isolatorinnenraums kann dann über die dem Isolatorraum zugeführte Luft durchgeführt werden.

Besonders bevorzugt wird eine Oberfläche der Vorrichtung, bevorzugt ein Füllventil, ein Vorlagekessel, eine Produktleitung, oder eine Kavität in einem Werkzeug zum Umformen von Behältern, mit einem Kühlmittel gekühlt, welches zuvor eine Kältefalle zur Aufbereitung der dem Isolatorraum zugeführten Luft durchlaufen hat. Auf diese Weise kann erreicht werden, dass die Oberfläche der Vorrichtung auf einer Temperatur gehalten werden, welche zumindest leicht über der Temperatur der Kältefalle liegt. Die dem Isolierraum zugeführte Luft, welche die Kältefalle bereits überstrichen hat, kondensiert entsprechend nicht mehr an der Oberfläche der Vorrichtung, da sie in der Kältefalle bereits eine kältere Oberfläche überstrichen hat, welche zu einer entsprechenden Trocknung der Luft geführt hat. Durch die vorgeschlagene Anbindung einer ausreichend dimensionierten Kältefalle an eine Oberflächenkühlung eines Werkzeugs zur Umformung eines Behälters über ein gemeinsames Kühlmittel wird entsprechend ein Kondensieren von Feuchtigkeit in den Kavitäten des Werkzeugs verhindert.

Die oben genannte Aufgabe wird weiterhin durch ein Verfahren mit den Merkmalen des Anspruchs 12 gelöst.

Entsprechend wird ein Verfahren zur Behandlung von Behältern, bevorzugt zum Befüllen von Behältern mit einem Füllprodukt und/oder zum Umformen eines Behälters, vorgeschlagen, wobei die Behandlung in einem Isolatorraum durchgeführt wird, Behälter über mindestens eine Behälterschleuse in den Isolatorraum eingebracht werden, über eine Zuluftaufbereitung im Isolatorraum eine definierte Atmosphäre hergestellt wird und Luft über eine Absaugvorrichtung aus dem Isolatorraum und der Behälterschleuse abgesaugt wird. Zumindest ein Teil der über die Absaugvorrichtung aus dem Isolatorraum und der Behälterschleuse abgesaugten Luft wird der Zuluftaufbereitung wieder zugeführt. Erfindungsgemäß ist zwischen der Absaugvorrichtung und der Zuluftaufbereitung ein Volumenstromteiler vorgesehen, welcher einen Teil des abgesaugten Luftvolumens variabel der Zuluftaufbereitung zuleitet.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische Darstellung einer Vorrichtung zur Behandlung von Behältern in einer ersten Ausführungsform;
- Figur 2: eine schematische Darstellung einer Vorrichtung zur Behandlung von Behältern in einer zweiten Ausführungsform;
- Figur 3: eine schematische Darstellung einer Vorrichtung zur Behandlung von Behältern in einer dritten Ausführungsform, und
- Figur 4: eine schematische Darstellung eines Kühlmittelkreislaufes.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen bezeichnet und auf eine wiederholte Beschreibung dieser Elemente wird in der nachfolgenden Beschreibung teilweise verzichtet, um Redundanzen zu vermeiden.

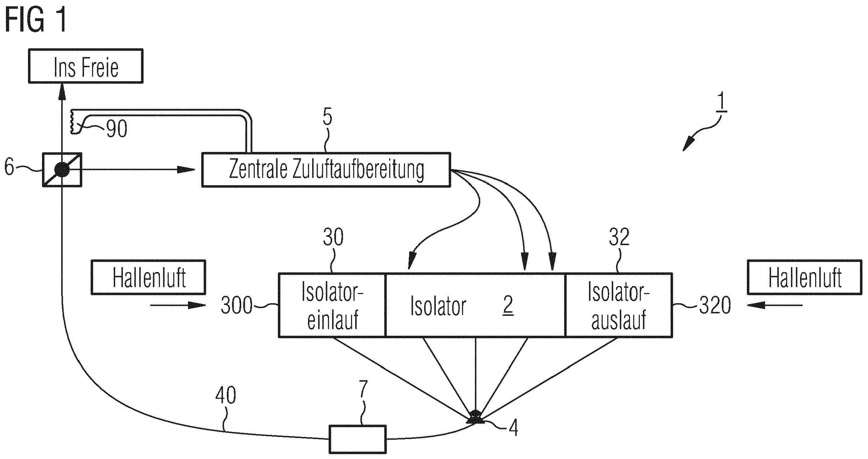

Figur 1 zeigt eine Vorrichtung 1 zur Behandlung mindestens eines Behälters in einer schematischen Darstellung. Ein Isolatorraum 2 ist vorgesehen, in welchem die eigentliche Behandlung des Behälters stattfindet, beispielsweise ein Sterilisieren, ein Befüllen oder ein Verschließen des Behälters. Eine Behandlung der Behälter kann auch durch ein Umformen von Behältern stattfinden, beispielsweise durch Umformen eines Preforms in einen mit einem Füllprodukt zu befüllenden Behälter.

Um Behälter, beispielsweise Preforms oder mit einem Füllprodukt zu befüllende Behälter, in den Isolatorraum 2 hinein und auch wieder aus diesem heraus zu befördern, sind zwei Behälterschleusen 30, 32 vorgesehen, wobei die erste Behälterschleuse 30 als Isolatorraumeinlauf ausgebildet ist, also das Einführen von Behältern in den Isolatorraum 2 ermöglicht, und die zweite Behälterschleuse 32 als Isolatorraumauslauf ausgebildet ist, also das Herausführen von Behältern aus dem Isolatorraum 2 ermöglicht.

Der Isolatorraum 2 ist so ausgebildet, dass er gegenüber der Umgebung im Wesentlichen luftdicht abgeschlossen ist. Im Isolatorraum 2 wird eine definierte Atmosphäre bereitgestellt, welche beispielsweise eine definierte Keimzahl, eine definierte Sporenzahl, eine definierte Temperatur sowie eine definierte Luftfeuchtigkeit aufweist. Auf diese Weise kann beispielsweise beim Behandeln von Behältern in Form einer Behälterbefüllung, beispielsweise einer kaltaseptischen Getränkeabfüllung, im Isolatorraum erreicht werden, dass die Haltbarkeit der jeweils abgefüllten Füllprodukte erhöht wird. Hierzu wird besonders bei einer kaltaseptischen oder eine ESL (extended shelf life) - Abfüllung im Isolatorraum 2 bevorzugt eine Atmosphäre vorgehalten, welche eine möglichst geringe Keimzahl, eine möglichst geringe Sporenzahl, eine Temperatur zwischen ungefähr 4°C und Umgebungstemperatur, sowie eine geringe Luftfeuchtigkeit aufweist. Der im Abfüllbereich der Vorrichtung angeordnete Isolatorraum 2 wird beispielsweise so betrieben, dass die darinnen umfasste Atmosphäre der Reinraumklasse ISO 5 zugeordnet werden kann.

Im Isolatorraum 2 wird bevorzugt ein leichter Überdruck so hergestellt, dass ein steter Luftstrom aus dem Isolatorraum 2 hinaus in die Behälterschleuse 30 beziehungsweise die Behälterschleuse 32 stattfindet und entsprechend ein Eindringen von Umgebungsluft über die jeweiligen Behälterschleusenaußenseiten 300 beziehungsweise 320 nicht stattfinden kann, so dass im Isolatorraum 2 entsprechend eine definierte Atmosphäre ausgebildet und beibehalten werden kann. Weiterhin kann der Anlagenbediener vor ausströmender Isolatorraum-Atmosphäre geschützt werden, was besonders auch beim Reinigen und Desinfizieren des Isolatorraums 2 mit einem gesundheitsschädlichen Desinfektionsmittel wie beispielsweise H₂O₂

Eine Absaugvorrichtung 4 ist vorgesehen, mittels welcher die Luft sowohl aus dem Isolatorraum 2 als auch aus den Behälterschleusen 30, 32 abgesaugt werden kann. Hierdurch wird im Isolatorraum 2 eine stete Umwälzung des im Isolatorraum 2 aufgenommenen Luftvolumens erreicht, damit eine gleichmäßige, definierte Atmosphäre im Isolatorraum 2 bereitgestellt werden kann. Das Absaugen der Luft über die Absaugvorrichtung 4 aus den Behälterschleusen 30, 32 ermöglicht es, im Bereich der Behälterschleusen 30, 32 einen leichten Unterdruck gegenüber der Umgebung bereitzustellen, derart, dass Umgebungsluft über die jeweiligen Schleusenaußenseiten 300, 320 über die Absaugvorrichtung 4 abgesaugt wird und ebenfalls nicht in den Isolatorraum 2 gelangen kann. Durch den leichten Überdruck im Isolatorraum 2 und den leichten Unterdruck in den Behälterschleusen 30, 32 wird entsprechend eine vollständige Isolierung des Isolatorraumes 2 gegenüber der Umgebung erreicht, obwohl Behälter über die jeweiligen Behälterschleusen 30, 32 in den Isolatorraum 2 hineingelangen sowie aus diesem wieder herausgelangen.

Eine Zuluftaufbereitung 5 ist vorgesehen, welche die dem Isolatorraum 2 zuzuführende und definierte Eigenschaften aufweisende Luft aufbereitet. Die Zuluftaufbereitung 5 dient beispielsweise dazu, die zuzuführende Luft weitgehend von Keimen und/oder Sporen zu befreien, sie auf eine bestimmte Temperatur zu temperieren und eine bestimmte Luftfeuchtigkeit vorzugeben. Hierzu ist in der Zuluftaufbereitung 5 bevorzugt zumindest ein Sterilfilter vorgesehen, mittels welchem die Keimbelastung der zuzuführenden Luft reduziert wird. Der Sterilfilter kann beispielsweise als HEPA Filter (High Efficiency Particle Air Filter) ausgebildet sein. Die Zuluftaufbereitung 5 weist weiterhin bevorzugt ein Temperierungsmittel, beispielsweise eine Heizung oder eine Kühlung auf, mittels welcher die dem Isolatorraum 2 zuzuführende Luft auf die gewünschte Temperatur temperiert wird. Weiterhin sind in der Zuluftaufbereitung 5 bevorzugt Mittel zum Einstellen der Luftfeuchtigkeit vorgesehen, beispielsweise eine Kältefalle zum Entziehen von Luftfeuchtigkeit, oder ein Verdampfer zum Hinzufügen von Luftfeuchtigkeit, so dass die dem Isolatorraum 2 zugeführte Luft die gewünschten Eigenschaften aufweist.

Die Zuluftaufbereitung 5 kann weiterhin eine in den Figuren nicht gezeigte Dosiervorrichtung zum Eindosieren von Desinfektionsmittel und/oder Reinigungsmittel, beispielsweise in Form von gasförmigem H₂O₂ aufweisen, so dass eine einfache Sterilisierung und/oder Reinigung des Isolatorraums 2 durch Hinzudosieren des entsprechenden Reinigungs- und/oder Sterilisierungsmittels zu dem in den Isolatorraum 2 eingeführten, aufbereiteten Luftstrom erreicht werden kann.

Die Absaugvorrichtung 4 ist in dem in Figur 1 gezeigten Ausführungsbeispiel über eine entsprechende Luftführung 40 und einen variablen Volumenstromteiler 6 mit der Zuluftaufbereitung 5 verbunden, derart, dass zumindest ein Teil der von der Absaugvorrichtung 4 aus dem Isolatorraum 2 sowie den Behälterschleusen 30, 32 abgesaugten Luft über die Luftführung 40 und den Volumenstromteiler 6 der Zuluftaufbereitung 5 zugeführt wird.

Durch diese Kreisführung der aus dem Isolatorraum 2 sowie den Behälterschleusen 30, 32 abgesaugten Luft wieder zurück zur Zuluftaufbereitung 5 kann zum einen erreicht werden, dass die mikrobiologische Belastung der dem Isolatorraum 2 zugeführten Luft weiter reduziert wird, da der entsprechende Sterilfilter in der Zuluftaufbereitung 5 mit bereits einmal gefilteter Luft beaufschlagt wird. Da die Sterilfilterung von Luft ein Wahrscheinlichkeitsprozess ist, ist die Wahrscheinlichkeit höher, dass die entsprechend wieder zugeführte Luft eine niedrigere Keimbelastung aufweist.

Weiterhin ist die wieder zugeführte Luft bereits weitgehend temperiert und weist weitgehend die vorgegebene Luftfeuchtigkeit auf, so dass die entsprechende Aufbereitung in der Zuluftaufbereitung 5 weniger Energie benötigt.

In den Isolatorraum 2 sowie den Behälterschleusen 30, 32 wird üblicherweise über die Absaugvorrichtung 4 ein größeres Luftvolumen abgesaugt, als von der Zuluftaufbereitung 5 benötigt. Dies liegt zum einen daran, dass über die offenen Behälteraußenseiten 300, 320 der Behälterschleusen 30, 32 zusätzliche Umgebungsluft eingesaugt wird. Zum anderen finden im Isolatorraum 2 Behandlungsprozesse an den jeweiligen Behältern statt. Hierbei wird beispielsweise Prozessluft verwendet und/oder das Luftvolumen wird durch das Füllprodukt aus dem zu befüllenden Behälter verdrängt. Daher wird über den Volumenstromteiler 6 nur einen Teil der über die Absaugvorrichtung 4 abgesaugten Luft der Zuluftaufbereitung 5 zugeleitet. Der übrige Anteil wird ins Freie abgegeben.

Bei einer Desinfektion und/oder Sterilisierung des Isolatorinnenraumes 2 mittels eines Desinfektionsmittels und/oder Sterilisationsmittels, beispielsweise H₂O₂, wird entsprechend über die Absaugvorrichtung auch dieses Mittel abgesaugt. Dieses Mittel, beispielsweise H₂O₂, wird bevorzugt über eine stromabwärts der Absaugvorrichtung 4 angeordnete Kältefalle 7 ausgefiltert. Die Kältefalle 7 muss dabei eine Temperatur aufweisen, welche niedriger als der Kondensationspunkt des jeweiligen Mittels ist, beispielsweise niedriger als der Kondensationspunkt des H₂O₂ bei der jeweiligen Konzentration des H₂O₂. Auf diese Weise ergibt sich auch ein problemloses Ausleiten der abgesaugten Luft ins Freie, ohne dass hier eine Umweltbelastung zu befürchten ist.

In einer in den Figuren nicht gezeigten Weiterbildung ist anstelle beziehungsweise zusätzlich zu der Kältefalle 7 mindestens ein Katalysator zur Vernichtung des Desinfektionsmittels und/oder des Reinigungsmittels vorgesehen. Durch die Verwendung des Katalysators kann die von der Kältefalle 7 bereitzustellende Temperatur erhöht werden, so dass die benötigte Energie verringert werden kann.

Die Kältefalle 7 kann beispielsweise bei Verwendung eines Katalysators auch stromabwärts eines Volumenstromteilers 6 angeordnet sein, so dass nur der Teil der Luft, welcher der Zuluftaufbereitung 5 zur erneuten Aufbereitung zugeführt wird, die Kältefalle 7 überstreicht. Der ins Freie abgeleitete Teil der Luft kann über den Katalysator von Desinfektionsmittel befreit werden, muss aber nicht weiter getrocknet werden. So kann Energie im Betrieb eingespart werden.

Die Zuluftaufbereitung 5 ist bevorzugt eine zentrale Zuluftaufbereitung, mittels welcher eine Vielzahl an Verbrauchern in einer Vorrichtung 1 zur Behandlung von Behältern mit der definierten Atmosphäre versorgt werden kann.

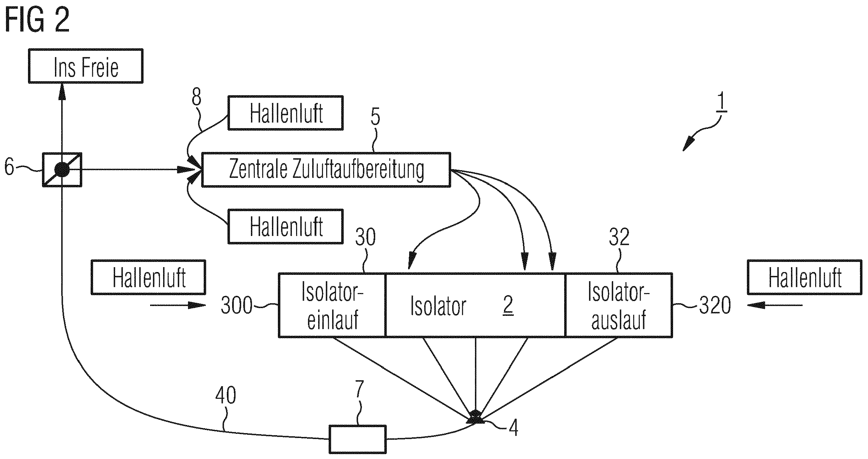

In Figur 2 ist eine weitere Ausführungsform der Vorrichtung 1 gezeigt. Der Zuluftaufbereitung 5 werden in dieser Ausführungsform zusätzlich noch Anteile an Umgebungsluft über eine Umgebungsluftzufuhr 8 zugeführt. Auf diese Weise kann eine Mischung der mit der Absaugvorrichtung 4 abgesaugten Luft sowie der Umgebungsluft hergestellt und der Zuluftaufbereitung 5 zugeführt werden. Entsprechend kann ein vorteilhaftes Mischungsverhältnis aus den unterschiedlichen Luftströmen hergestellt werden.

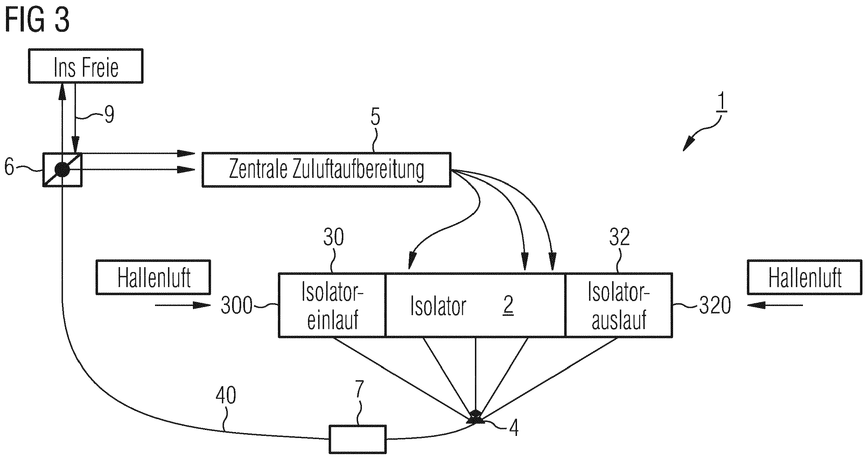

In Figur 3 ist eine weitere Ausführungsform gezeigt, bei welcher über eine Frischluftzufuhr 9 der Zuluftaufbereitung 5 Frischluft aus der Umgebung der jeweiligen Produktionshalle, beispielsweise aus dem Freien, zugeführt werden kann.

Bei einer vorteilhaften Kombination der in den Figuren 2 und 3 gezeigten Zuführungen von Umgebungsluft aus der jeweiligen Produktionshalle sowie von Frischluft aus der Umgebung der Produktionshalle kann durch ein entsprechendes Einstellen des Mischungsverhältnisses ein besonders bevorzugtes Zuführen von aufzubereitender Luft zu der Zuluftaufbereitung 5 erreicht werden. Durch die Mischung der abgesaugten Luft mit Frischluft und Umgebungsluft kann eine Optimierung des Energiebedarfes in Kombination mit einer Verbesserung der mikrobiologischen Anlagensicherheit erreicht werden.

Je nach Verhältnissen in der Produktionshalle sowie nach den Außenverhältnissen kann über eine nicht gezeigte Steuerung entsprechend eine Optimierung der der Zuluftaufbereitung 5 zuzuführenden und aufzubereitenden Luft erreicht werden. Beispielsweise kann im Winter, wenn die Außenluft relativ trocken und kalt ist, Frischluft von außen zugeführt werden, so dass der Aufwand für eine Trocknung und/oder Kühlung der Zuluft reduziert werden kann. Im Sommer hingegen kann aus dem Außenbereich warme Luft hinzugezogen werden, so dass ein eventuell notwendiges Erwärmen der Zuluft reduziert wird oder entfällt.

Eine weitere Energieeinsparung lässt sich über einen Wärmetauscher 90 erreichen, mittels welchem der abgesaugten Luft vor dem Ausblasen ins Freie ein Teil der vorhandenen Wärmeenergie entzogen werden kann. Diese Wärmeenergie kann dann der Zuluftaufbereitung 5 zugeführt werden, um zusätzliche Energie zur Kühlung oder Erwärmung der aufzubereitenden Luft zur Verfügung zu stellen. In einer Alternative oder zusätzlich kann die Wärmeenergie auch einer Umgebungsluftzufuhr 8 oder einer Frischluftzufuhr 9 zugeführt werden.

Die oben beschriebene Vorrichtung kann auch in Abfüllanlagen nach dem Laminar-Flow System eingesetzt werden, wobei die Luft dann an unten angeordneten Überströmöffnungen abgesaugt beziehungsweise abgeleitet wird und nach Aufbereitung in der Luftaufbereitung von oben wieder dem Reinraum zugeführt wird.

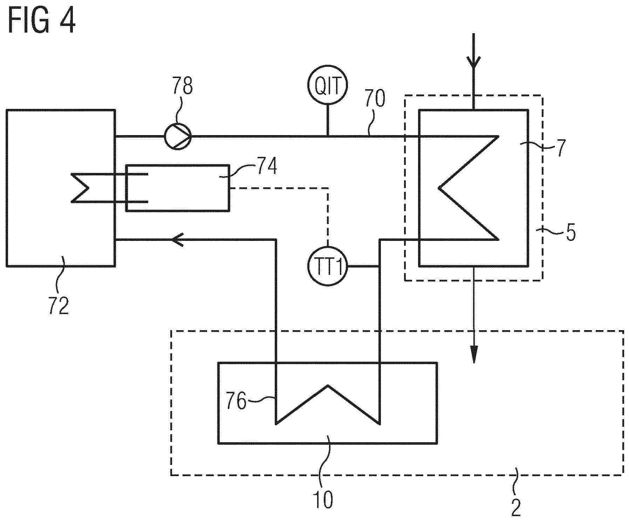

In Figur 4 ist schematisch ein Kühlmittelkreislauf 70 gezeigt, mittels welchem Kühlmittel, beispielsweise Glykol, von einer Kältefalle 7 in ein Werkzeug 10 zum Umformen eines Behälters, beispielsweise zum Umformen eines Preforms in einen zu befüllenden Behälter, strömt. Die Kältefalle 7 ist in dem gezeigten Ausführungsbeispiel schematisch in die Zuluftaufbereitung 5 integriert, so dass die dem Isolatorraum 2 zuzuführende Luft über die in der Zuluftaufbereitung 5 integrierte Kältefalle 7 strömt, bevor sie in den Isolatorraum 2 gelangt.

Das Kühlmittel wird von einem Kühlaggregat 72 auf einer über einen Thermostaten TT1 geregelten Temperatur gehalten und über eine Pumpe 78 mit einem konstanten Volumenstrom gepumpt. Das Kühlaggregat 72 umfasst in an sich bekannter Weise einen Kompressor 74, welcher die Kälteenergie bereitstellt, so dass das Kühlmittel gekühlt werden kann.

In dem Werkzeug 10 zum Umformen wird über eine entsprechende Kühlmittelführung 76 eine Kühlung der Oberflächen des Werkzeugs 10, bevorzugt der Kavitäten des Werkzeugs 10, erreicht. Das Kühlmittel, welches die Kältefalle 7 bereits durchlaufen hat und im Kühlmittelkreislauf 70 die Kühlmittelführung 76 zum Kühlen der Oberflächen des Werkzeugs 10 erreicht, nimmt im Bereich der Kältefalle 7 bereits etwas Wärmeenergie auf. Entsprechend hat das Kühlmittel beim Durchfließen der Kühlmittelführung 76 bereits eine etwas höhere Temperatur, als beim vorigen Durchfließen der Kältefalle 7. Die Luft, welche die Kältefalle überstreicht, ist entsprechend bereits mit einer kälteren Oberfläche in Berührung gekommen, als dies nachfolgend bei den Oberflächen des Werkzeugs 10 der Fall ist. Eine Kondensation an den Oberflächen des Werkzeugs 10 findet daher nicht mehr oder zumindest nur noch reduziert statt.

Eine ähnliche Anordnung kann auch beispielsweise bei einem Füller zum Befüllen von Behältern vorgesehen sein, bei welchem am Produktweg entsprechend Kühlmittelführungen 76 vorgesehen sind, welche beispielsweise zum Kühlen des Vorlagekessels, der Produktleitung und/oder des Füllventils dienen. Durch einen entsprechenden Kühlmittelkreislauf, in welchem das Kühlmittel zunächst die Kältefalle durchströmt, und erst dann die Kühlmittelführungen im Produktweg durchströmt, kann entsprechend wieder ein leicht wärmeres Temperaturniveau am Produktweg erreicht werden, als in der Kältefalle 7 vorherrscht, so dass ein Kondensieren an den den Produktweg bildenden Oberflächen verringert oder vermieden werden kann.

### Bezugszeichenliste

- 1: Vorrichtung zur Behandlung mindestens eines Behälters
- 10: Werkzeug zum Umformen von Behältern
- 2: Isolatorraum
- 30: Behälterschleuse
- 32: Behälterschleuse
- 300: Behälterschleusenaußenseite
- 320: Behälterschleusenaußenseite
- 4: Absaugvorrichtung
- 40: Luftführung
- 5: Zuluftaufbereitung
- 6: Volumenstromteiler
- 7: Kältefalle
- 70: Kühlmittelkreislauf
- 72: Kühlaggregat
- 74: Kompressor
- 76: Kühlmittelführung
- 78: Pumpe
- 8: Umgebungsluftzufuhr
- 9: Frischluftzufuhr
- 90: Wärmetauscher

## Patentansprüche

1. Vorrichtung (1) zur Behandlung mindestens eines Behälters, bevorzugt zum Befüllen mindestens eines Behälters mit einem Füllprodukt in einer Getränkeabfüllanlage und/oder zum Umformen eines Behälters, umfassend einen eine definierte Atmosphäre umfassenden Isolatorraum (2), in welchem die Behandlung des Behälters vorgenommen wird, und mindestens eine Behälterschleuse (30, 32) zum Einbringen des Behälters in den Isolatorraum (2) oder zum Ausbringen des Behälters aus dem Isolatorraum (2), weiterhin eine Absaugvorrichtung (4) zum Absaugen von Luft aus der Behälterschleuse (30, 32) und aus dem Isolatorraum (2), sowie eine Zuluftaufbereitung (5) zur Aufbereitung von dem Isolatorraum (2) zuzuführender Luft, wobei
die Absaugvorrichtung (4) so mit der Zuluftaufbereitung (5) verbunden ist, dass zumindest ein Teil der aus der Behälterschleuse (30, 32) und dem Isolatorraum (2) abgesaugten Luft der Zuluftaufbereitung (5) zur erneuten Aufbereitung zugeführt wird,
**dadurch gekennzeichnet, dass**
zwischen der Absaugvorrichtung (4) und der Zuluftaufbereitung (5) ein Volumenstromteiler (6) vorgesehen ist, welcher einen Teil des abgesaugten Luftvolumens variabel der Zuluftaufbereitung (5) zuleitet.

2. Vorrichtung (1) gemäß Anspruch 1, **dadurch gekennzeichnet, dass** die Zuluftaufbereitung (5) mit einer Umgebungsluftzufuhr (8) zur Zuführung von Umgebungsluft zu der Zuluftaufbereitung (5) verbunden ist.

3. Vorrichtung (1) gemäß einem der vorstehenden Ansprüche, **dadurch gekennzeichnet, dass** die Zuluftaufbereitung (5) mit einer Frischluftzufuhr (9) zur Zuführung von Frischluft zu der Zuluftaufbereitung (5) verbunden ist.

4. Vorrichtung (1) gemäß einem der vorstehenden Ansprüche, **dadurch gekennzeichnet, dass** eine Steuerung vorgesehen ist, welche den Anteil an abgesaugter Luft, Frischluft und/oder Umgebungsluft, welcher der Zuluftaufbereitung (5) zugeführt wird, gemäß den jeweiligen Umgebungs- und Außenbedingungen sowie gemäß den vorgegebenen Betriebsparametern der Vorrichtung (1) steuert.

5. Vorrichtung (1) gemäß einem der vorstehenden Ansprüche, **dadurch gekennzeichnet, dass** stromabwärts der Absaugvorrichtung (4) eine Kältefalle (7) zum Abscheiden von Desinfektionsmittel und/oder Sterilisationsmittel, bevorzugt von H₂O₂, vorgesehen ist, bevorzugt vor einem Volumenstromteiler (6).

6. Vorrichtung (1) gemäß einem der vorstehenden Ansprüche, **dadurch gekennzeichnet, dass** die Zuluftaufbereitung (5) als zentrale Zuluftaufbereitung zur Aufbereitung von Zuluft zu einer Vielzahl von Verbrauchern einer Behälterbehandlungsanlage vorgesehen ist.

7. Vorrichtung (1) gemäß einem der vorstehenden Ansprüche, **dadurch gekennzeichnet, dass** die Zuluftaufbereitung (5) mindestens einen Sterilfilter, mindestens eine Temperierungsvorrichtung, mindestens eine Kältefalle (7) und/oder mindestens ein Mittel zur Einstellung der Luftfeuchtigkeit umfasst.

8. Vorrichtung (1) gemäß einem der vorstehenden Ansprüche, **dadurch gekennzeichnet, dass** ein Wärmetauscher (90) vorgesehen ist, welcher so angeordnet ist, dass er dem nicht der Zuluftaufbereitung (5) zugeführten Teil der abgesaugten Luft Wärmeenergie entzieht und diese der Zuluftaufbereitung (5), der Umgebungsluftzufuhr (8) und/oder der Frischluftzufuhr (9) zuführt.

9. Vorrichtung (1) gemäß einem der vorstehenden Ansprüche, **dadurch gekennzeichnet, dass** mindestens ein Katalysator zur Vernichtung eines Desinfektionsmittels und/oder eines Reinigungsmittels stromabwärts der Absaugvorrichtung (4) angeordnet ist.

10. Vorrichtung (1) gemäß einem der vorstehenden Ansprüche, **dadurch gekennzeichnet, dass** in der Zuluftaufbereitung (5) eine Zudosierung von Desinfektionsmittel und/oder Reinigungsmittel zu der dem Isolatorraum (2) zuzuführenden Luft vorgesehen ist, bevorzugt zum Zudosieren von gasförmigem H₂O₂.

11. Vorrichtung (1) gemäß einem der vorstehenden Ansprüche, **dadurch gekennzeichnet, dass** eine Oberfläche, bevorzugt ein Füllventil, eine Produktleitung, ein Vorlagekessel und/oder eine Kavität in einem Werkzeug, mit einem Kühlmittel kühlbar ist, welches zuvor eine Kältefalle (7) zur Aufbereitung der Zuluft zum Isolatorraum (2) durchlaufen hat.

12. Verfahren zur Behandlung von Behältern, bevorzugt zum Befüllen von Behältern mit einem Füllprodukt und/oder zum Umformen eines Behälters, wobei die Behandlung in einem Isolatorraum (2) durchgeführt wird, Behälter über mindestens eine Behälterschleuse (30, 32) in den Isolatorraum (2) eingebracht werden, über eine Zuluftaufbereitung (5) im Isolatorraum (2) eine definierte Atmosphäre hergestellt wird und Luft über eine Absaugvorrichtung (4) aus dem Isolatorraum (2) und der Behälterschleuse (30, 32) abgesaugt wird, wobei
zumindest ein Teil der über die Absaugvorrichtung (4) aus dem Isolatorraum (2) und der Behälterschleuse (30, 32) abgesaugten Luft der Zuluftaufbereitung (5) wieder zugeführt wird,
**dadurch gekennzeichnet, dass**
zwischen der Absaugvorrichtung (4) und der Zuluftaufbereitung (5) ein Volumenstromteiler (6) vorgesehen ist, welcher einen Teil des abgesaugten Luftvolumens variabel der Zuluftaufbereitung (5) zuleitet.

## Claims

1. Device (1) for treating at least one container, preferably for filling at least one container with a fill product in a beverage filling machinery and/or for reshaping a container, comprising an isolator chamber (2) enclosing a defined atmosphere, in which the treatment of the container is undertaken, and at least one container transfer tube (30, 32) for introducing the container into the isolator chamber (2) or for removing the container from the isolator chamber (2), further a suction device (4) for extracting air out of the container transfer tube (30, 32) and out of the isolator chamber (2) and a feed air preparation device (5) for preparing air to be supplied to the isolator chamber (2), wherein
the suction device (4) is connected with the feed air preparation device (5) such that at least one part of the air extracted out of the container transfer tube (30, 32) and the isolator chamber (2) is supplied to the feed air preparation device (5) for renewed preparation,
**characterised in that**
between the suction device (4) and the feed air preparation device (5) is provided a volume flow divider (6) which supplies a part of the extracted air volume in a variable manner to the feed air preparation device (5).

2. Device (1) according to claim 1, **characterised in that** the feed air preparation device (5) is connected with an environmental air supply (8) for the supply of environmental air to the feed air preparation device (5).

3. Device (1) according to any of the preceding claims, **characterised in that** the feed air preparation device (5) is connected with a fresh air supply (9) for the supply of fresh air to the feed air preparation device (5).

4. Device (1) according to any of the preceding claims, **characterised in that** a control device is provided which controls the ratio of extracted air, fresh air and/or environmental air which is supplied to the feed air preparation device (5), according to the respective environmental and external conditions and according to the prescribed operational parameters of the device (1).

5. Device (1) according to any of the preceding claims, **characterised in that** downstream from the suction device (4) is provided a cold trap (7) for the removal of disinfection agents and/or sterilisation agents, preferably of H₂O₂, preferably prior to a volume flow divider (6).

6. Device (1) according to any of the preceding claims, **characterised in that** the feed air preparation device (5) is provided as central feed air preparation device for the preparation of feed air to a plurality of users of a container treatment machinery.

7. Device (1) according to any of the preceding claims, **characterised in that** the feed air preparation device (5) comprises at least one sterilising filter, at least one temperature control device, at least one cold trap (7) and/or at least one means for adjusting the air humidity.

8. Device (1) according to any of the preceding claims, **characterised in that** a heat exchanger (90) is provided which is disposed such that it removes heat energy from the part of the extracted air which is not supplied to the feed air preparation device (5) and supplies said heat energy to the feed air preparation device (5), the environmental air supply (8) and/or to the fresh air supply (9).

9. Device (1) according to any of the preceding claims, **characterised in that** at least one catalytic converter for the destruction of a disinfection agent and/or of a cleaning agent is disposed downstream of the suction device (4).

10. Device (1) according to any of the preceding claims, **characterised in that** in the feed air preparation device (5) is provided a metered addition of disinfection agent and/or cleaning agent to the air to be supplied to the isolator chamber (2), preferably for the metered addition of gaseous H₂O₂.

11. Device (1) according to any of the preceding claims, **characterised in that** a surface, preferably a filling valve, a product line, a receiver vessel and/or a cavity in a tool, is coolable with a cooling means which has previously run through a cold trap (7) for the preparation of the feed air to the isolator chamber (2).

12. Method for treating containers, preferably for filling containers with a fill product and/or for reshaping a container, wherein the treatment is carried out in an isolator chamber (2), containers are introduced via at least one container transfer tube (30, 32) into the isolator chamber (2), via a feed air preparation device (5) in the isolator chamber (2) a defined atmosphere is produced and air is extracted via a suction device (4) out of the isolator chamber (2) and the container transfer tube (30, 32), wherein
at least one part of the air extracted via the suction device (4) out of the isolator chamber (2) and the container transfer tube (30, 32) is supplied back to the feed air preparation device (5),
**characterised in that**
between the suction device (4) and the feed air preparation device (5) is provided a volume flow divider (6) which supplies a part of the extracted air volume in a variable manner to the feed air preparation device (5).

## Revendications

1. Dispositif (1) de traitement d'au moins un récipient, de préférence de remplissage d'au moins un récipient avec un produit de remplissage dans une installation d'embouteillage de boisson et/ou de mise en forme d'un récipient, comprenant un espace isolateur (2) comprenant une atmosphère définie, dans lequel le traitement du récipient a lieu, et au moins un sas pour récipient (30, 32) pour l'introduction du récipient dans l'espace isolateur (2) ou pour l'extraction du récipient de l'espace isolateur (2), en outre un dispositif d'aspiration (4) pour l'aspiration d'air du sas pour récipient (30, 32) et de l'espace isolateur (2), ainsi qu'un traitement d'air amené (5) pour le traitement de l'air à amener à l'espace isolateur (2), dans lequel
le dispositif d'aspiration (4) est relié au traitement d'air amené (5) de sorte qu'au moins une partie de l'air aspiré du sas pour récipient (30, 32) et de l'espace isolateur (2) est amenée au traitement d'air amené (5) pour un nouveau traitement,
**caractérisé en ce que**
un diviseur de débit volumétrique (6), lequel dirige une partie du volume d'air aspiré de manière variable au traitement d'air amené (5), est prévu entre le dispositif d'aspiration (4) et le traitement d'air amené (5).

2. Dispositif (1) selon la revendication 1, **caractérisé en ce que** le traitement d'air amené (5) est relié à l'alimentation en air ambiant (8) pour l'alimentation du traitement d'air amené (5) en air ambiant.

3. Dispositif (1) selon l'une quelconque des revendications précédentes, **caractérisé en ce que** le traitement d'air amené (5) est relié à une alimentation en air frais (9) pour l'alimentation du traitement d'air amené (5) en air frais.

4. Dispositif (1) selon l'une quelconque des revendications précédentes, **caractérisé en ce qu'**une commande est prévue, laquelle commande la part d'air aspiré, d'air frais et/ou d'air ambiant, qui est amené au traitement d'air amené (5), conformément aux conditions ambiantes et extérieures respectives ainsi que conformément aux paramètres de fonctionnement prédéfinis du dispositif (1).

5. Dispositif (1) selon l'une quelconque des revendications précédentes, **caractérisé en ce qu'**un piège à froid (7) est prévu en aval du dispositif d'aspiration (4) pour la séparation d'agent désinfectant et/ou d'agent stérilisant, de préférence de H₂O₂, de préférence avant un diviseur de débit volumétrique (6).

6. Dispositif (1) selon l'une quelconque des revendications précédentes, **caractérisé en ce que** le traitement d'air amené (5) est prévu en tant que traitement d'air amené central pour le traitement d'air amené vers une pluralité de consommateurs d'une installation de traitement de récipient.

7. Dispositif (1) selon l'une quelconque des revendications précédentes, **caractérisé en ce que** le traitement d'air amené (5) comprend au moins un filtre stérile, au moins un dispositif de régulation de température, au moins un piège à froid (7) et/ou au moins un moyen de réglage de l'humidité de l'air.

8. Dispositif (1) selon l'une quelconque des revendications précédentes, **caractérisé en ce qu'**un échangeur thermique (90) est prévu, lequel est agencé de sorte qu'il extrait de l'énergie thermique de la partie de l'air aspiré non amenée au traitement d'air amené (5) et l'amène au traitement d'air amené (5), à l'alimentation en air ambiant (8) et/ou à l'alimentation en air frais (9).

9. Dispositif (1) selon l'une quelconque des revendications précédentes, **caractérisé en ce qu'**au moins un catalyseur pour la destruction d'un agent désinfectant et/ou d'un agent nettoyant est agencé en aval du dispositif d'aspiration (4).

10. Dispositif (1) selon l'une quelconque des revendications précédentes, **caractérisé en ce que** dans le traitement d'air amené (5), une addition d'agent désinfectant et/ou d'agent nettoyant à l'air à amener à l'espace isolateur (2) est prévue, de préférence pour l'addition de H₂O₂ gazeux.

11. Dispositif (1) selon l'une quelconque des revendications précédentes, **caractérisé en ce qu'**une surface, de préférence une soupape de remplissage, une conduite de produit, une cuve tampon et/ou une cavité dans un outil, peut être refroidie avec un réfrigérant, lequel a traversé auparavant un piège à froid (7) pour le traitement de l'air amené pour l'espace isolateur (2).

12. Procédé de traitement de récipients, de préférence de remplissage de récipients avec un produit de remplissage et/ou de mise en forme d'un récipient, dans lequel le traitement est réalisé dans un espace isolateur (2), des récipients sont introduits dans l'espace isolateur (2) par le biais d'au moins un sas pour récipient (30, 32), une atmosphère définie est établie dans l'espace isolateur (2) par le biais d'un traitement d'air amené (5) et l'air est aspiré de l'espace isolateur (2) et du sas pour récipient (30, 32) par le biais d'un dispositif d'aspiration (4), dans lequel
au moins une partie de l'air aspiré de l'espace isolateur (2) et du sas pour récipient (30, 32) par le biais d'un dispositif d'aspiration (4) est à nouveau amenée au traitement d'air amené (5),
**caractérisé en ce que**
un diviseur de débit volumétrique (6), lequel dirige une partie du volume d'air aspiré de manière variable au traitement d'air amené (5), est prévu entre le dispositif d'aspiration (4) et le traitement d'air amené (5).
